# EUROPEAN PATENT APPLICATION

(11) **EP 3 150 496 A1**
(43) Date of publication of application: **05.04.2017**
(21) Application number: 16191954.3
(22) Date of filing: 30.09.2016
(51) Int. Cl.: B65B 1/02, B65B 1/22, B65G 27/32, B65G 27/26, B65G 15/00, B65G 27/04, B65G 47/28

(54) **PACKAGING MACHINE**

(30) Priority: 02.10.2015 IT UB20154145
(71) Applicant: Martini S.r.l., 35015 Galliera Veneta (Prov. of Padova) (IT)
(72) Inventor: MARTINI, Antonio, 35015 Galliera Veneta (PD) (IT)
(74) Representative: Cicconetti, Andrea

(57) **Abstract**

A packaging machine to package small size, granular, powdered food products in bags (50), comprising a forming and filling station (2) to form the bags (50) and dose a predefined quantity of product (100) inside each of them, a closing station (3) to close the bags (50) filled with the product (100), conveyor means (4) to receive the open bags (50) and containing the quantity of product (100) from the forming and filling station (2) and moving the bags (50) towards the closing station (3) along an advancing direction (A), and a compacting unit (5) to compact the product (100) in the bags (50) and provided with a supporting plane (6) to support the bags (50) coming from the forming and filling station (2) and with vibrating means (10) being connected to the supporting plane (6) and suitable to generate vibrations in the latter and in the bags (50) for compacting and settling the product (100) in the bags (50); the vibrating means comprises at least one vibrating unit (10) comprising at least one elastic element (11) connecting the supporting plane (6) to frame means (7) of the packaging machine (1) and electromagnet means (12) acting on the elastic element (11) in order to make the latter oscillate with a predefined oscillation frequency; the elastic element (11) is fastened to said frame means (7) at a tilt angle (α) between 5° and 15° with respect to the supporting plane (6).

## Description

The invention concerns machines and systems to package products and particularly, it concerns a machine to package small size products or granular or powdered products, for example food products such as pasta, cookies, rice, nuts, candies or flour, sugar, etc. in bags made of plastic material.

The known packaging machines to package food products in bags typically comprise a filling and forming station where a predefined quantity of product is dosed inside individual bags while the latter are formed starting from a plastic material film being unrolled from a reel. Actually, the filling and forming station is provided with folding and cutting means and with sealing means that closes the bags on the bottom and on the side so that the latter can receive the product. Transport or conveying means, such as for example strips or belts, is provided to receive the bags from the filling and forming station and to move them along a sliding plane from the filling station to a following closing station where the bags are closed on the top by sealing a top portion of the latter and possibly folding their top edge before applying a fastening label.

One disadvantage of these known packaging machines is that in the forming and filling station the products are dosed, namely poured, by gravity inside the bags with a casual and messy arrangement by means of dedicated forming tubes. More precisely, for example in case of pasta (namely pasta elements having small size and different shapes and forms, intended to be cooked in boiling water) or cookies, crackers, nuts, candies, etc., the above-mentioned elements when poured inside the bags tend to occupy in a messy way the whole bag volume with a low compaction. Similarly, in the granular or powdered products (rice, flour, and sugar) the casual arrangement causes a low compaction, namely a low density (ratio between mass and volume) of the product in the bags.

In both cases, the overall size or volume of the product related to the mass or weight to be packaged can be too much, causing problems at the closing station where the bags must be folded and closed on the top.

In order to be able to properly close the bags, therefore it would be necessary to use bags having bigger sizes (or likewise to reduce the filling quantity), but in that way the closed bags, due to the settling and/or compacting of the product that usually happens during their transportation and/or handling, would result not completely filled. A packaging of this kind is not acceptable because it could lead to the damaging of the products (particularly the fragile products, such as for example dry food products) in case they would bump into each other due to the excessive space existing therebetween. Moreover, a non-completely filled bag is not acceptable from an aesthetic and/or commercial point of view.

To overcome this drawback, packaging machines are known being provided with dedicated compacting or settling systems for the products in the bags.

For example, packaging machines are known being provided with pliers that, by holding each filled bag at the top portion to be folded and closed, shake it so that the products therein settle and compact, in order to obtain an optimal arrangement.

A disadvantage of these packaging machines is that their operation must be stopped every time the pliers have to shake the bags, considerably increasing the duration of the packaging cycle and reducing the machine productivity. Moreover, the bags risk to be damaged in case the force used by the pliers to shake the bag is excessive or in case the latter is not properly hold by the pliers.

Packaging machines are also known being provided with one or more retractably movable sticks or rods which, being placed below the bags under the sliding plane, are vertically spring actuated to repeatedly abut the bags bottom during their movement from the forming and filling station until the closing station, allowing the contained products to be settled and compacted. In this way, it is possible to compact the products without the need to stop the machine operation and, therefore, the duration of the packaging cycle does not increase. However, the sticks acting only on the base or bottom of the bags do not allow having a homogeneous and uniform settling of the product inside the whole bag. Moreover, the sticks, due to the bump against the bags bottom, can shatter or damage the products being inside them and therefore they cannot be used to package fragile products, such as dry food products, for example pasta and cookies.

An object of the invention is to improve the known packaging machines, particularly the packaging machines for small size, granular or powdered food products.

Another object is to provide a packaging machine that allows compacting and settling the products in an optimal way inside the bags before closing without damaging or degrade the latter and/or the bags.

A further object of the invention is to provide a packaging machine that allows settling and compacting the products inside the bags during the transfer from a filling station to a closing station of the bags without increasing the duration of the packaging cycle.

These and other objects are achieved by a tube made of plastic material and according to one or more of the claims reported below.

The invention will be better understood and practiced by referring to the attached drawings, which show some of its exemplar and non-limiting embodiments, wherein:
- figure 1 is a partial and schematic lateral view of the packaging machine of the invention;
- figure 2 is a partial and schematic top view of the machine of figure 1;
- figure 3 is an enlarged lateral view of a compacting unit of the machine of figure 1;
- figure 4 is a top view of the compacting unit of figure 3;
- figure 5 is a cross-section along line V-V of figure 4.

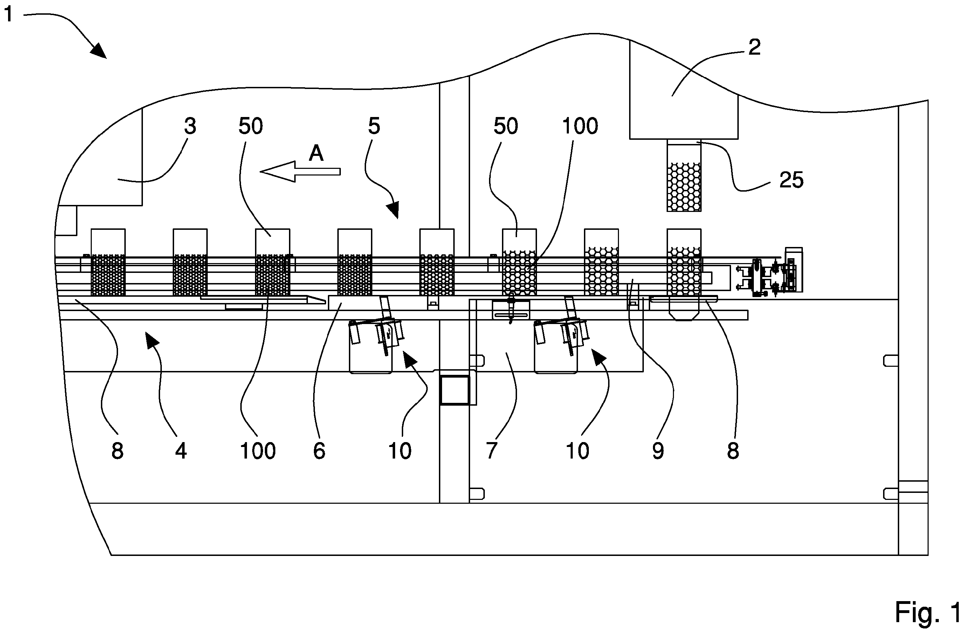

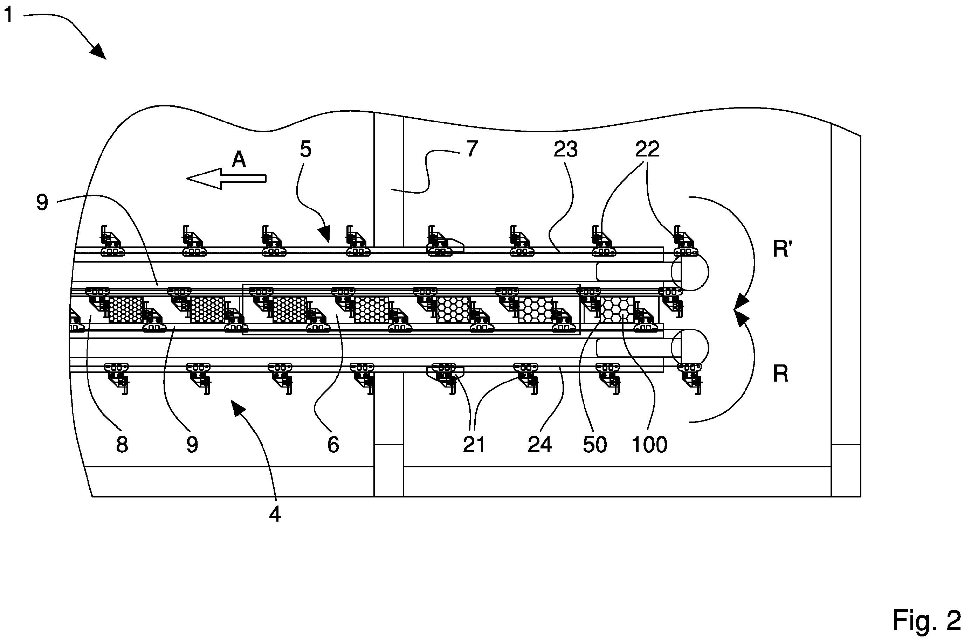

Referring to figures 1 and 2, there is shown a packaging machine 1 according to the invention, being arranged to package predefined quantities of small size or granular or powdered products in packages or bags 50 made of plastic material.

The packaging machine 1 comprises a forming and filling station 2, a closing station 3, conveyor means 4 and a compacting unit 5.

More precisely, in the forming and filling station 2, being of a known type and not shown in details in the figures, the bags 50 are formed starting from a plastic material film that is wrapped around a forming tube 25. The individual bags 50, for example of the square double bottom type, are made by cutting, folding and closing the film on the side and on the bottom while they are filled with a predefined quantity of product 100 through the forming tube 25.

The product 100 is a food product being formed, for example, by small size elements such as pasta, cookies, crackers, candies, chocolates or in a granular form, such as rice, nuts, cereals, legumes or powdered, for example flour, sugar.

Once the individual bags 50, opened at the top, have been filled with the product 100, they are placed on the conveyor means 4 in order to be moved along an advancing direction A towards the closing station 3.

The conveyor means 4 comprises a sliding plane 8, on which the bags 50 are placed and move and two side walls or guides 9, being opposite to each other and parallel to the advancing direction A, arranged to laterally guide and support the bags 50 during the handling. The conveyor means 4 also comprises moving means 21, 22, 23, 24 arranged to engage and move the bags 50 along the advancing direction A.

In the shown embodiment, the moving means comprises a plurality of pushing elements 21 and related abutting elements 22 that are equally spaced, movable and arranged to abut and move the bags 50 along the advancing direction A. The pushing elements 21 and the abutting elements 22 are fastened to at least one closed loop flexible element 23, 24 that is actuated in order to move the pushing elements 21 and the abutting elements 22 along the advancing direction A, when engaged with the bags 50.

In the embodiment being shown in the figures, the conveyor means 4 comprises a first closed loop flexible element 23, for example a chain, a belt or a strip, that is arranged on a plain parallel to the sliding plane 8, which the pushing elements 21 equally spaced to each other are fastened to. Similarly, the moving means 4 comprises a second closed loop flexible element 24, for example a chain, a belt or a strip, that is arranged on a plane parallel to the sliding plane 8, which the abutting elements 22 equally spaced to each other are fastened.

The first flexible element 23 and the second flexible element-24 are actuated by motor means, of a known type and not shown in the figures, which have rotation directions R, R' being opposite and synchronized with the same speed so that a pushing element 21 and a corresponding abutting element 22 abut opposite lateral faces of the bag 50, holding the latter straight during the moving along the advancing direction A. The stability of the bag 50 is also guaranteed by the side walls 9 of the moving means 4. The pushing elements 21 and the abutting elements 22 are arranged in order to be alternated on the sliding plane 8 and form, in cooperation with the side walls 9, suitable movable compartments where the respective bags 50 to be moved are hosed. Actually, once each bag 50 has been formed and filled by the forming and filling station 2 and then placed on the sliding plane 8, it is engaged by correspondent pushing element 21 and abutting element 22, which are moving it along the advancing direction A.

In one variation of the packaging machine 1 of the invention, not shown in the figures, the moving means comprises a single closed loop flexible element that is arranged on a plane being parallel to the sliding plane 8 of the bags 50 and to which both the pushing elements 21 and the abutting elements 22 are fastened and equally spaced apart.

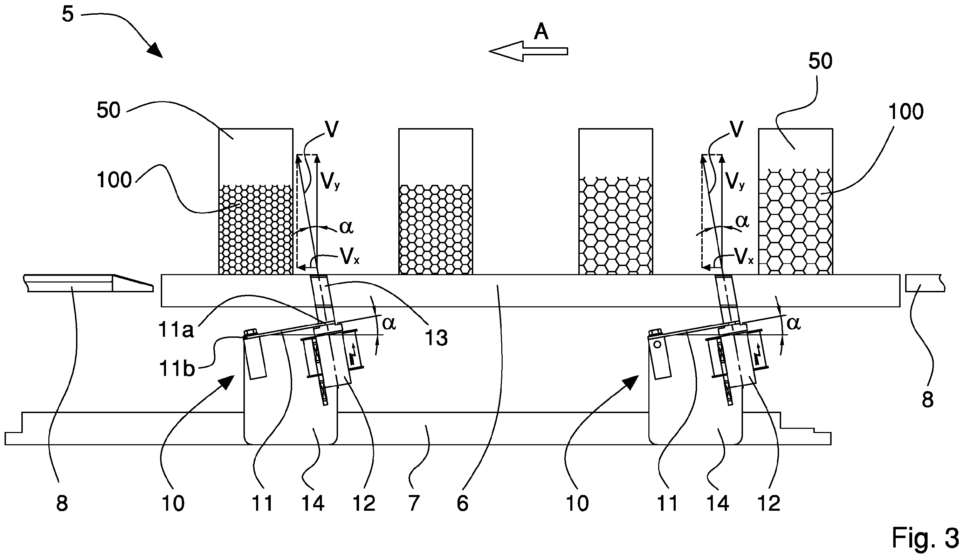

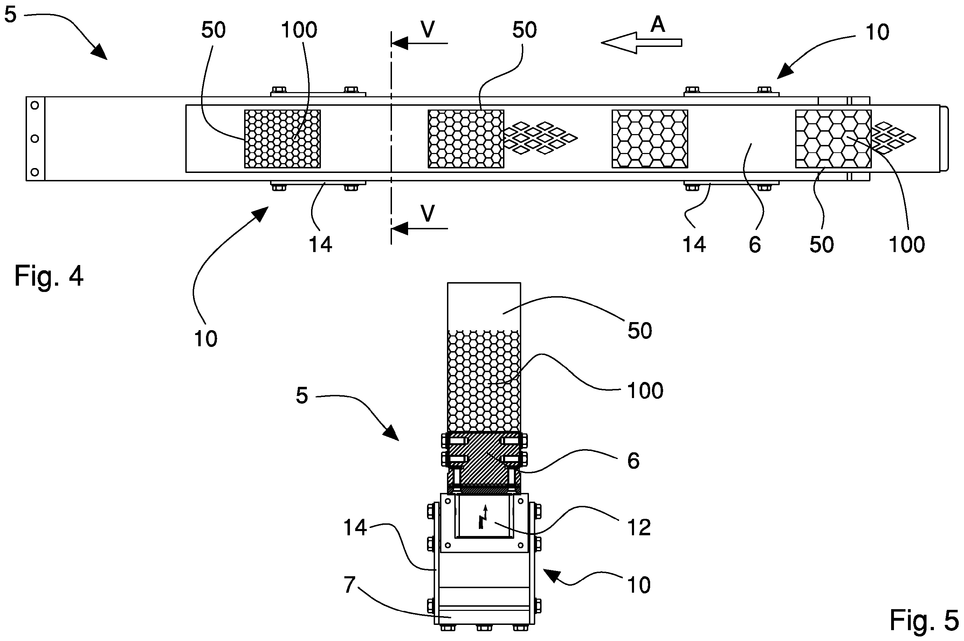

Particularly referring to the figures 3 to 5, the compacting unit 5 comprises a supporting plane 6 to support the bags 50 coming from the forming and filling station 2 and vibrating means 10 that are connected to the supporting plane 6 and arranged to generate and induce vibrations in the latter and in the bags 50 arranged thereon, the vibrations compacting and settling the product 100 in the respective bags 50.

In the shown embodiment, the compacting unit 6 is associated to the conveyor means 4, whose sliding plane 8 is interrupted to allow transferring the bags 50 on the vibrating supporting plane 6 by means of the pushing elements 21 and the abutting elements 22 of the moving means. Similarly, the side walls 9 of the moving means 4 extend along the compacting unit 5 in order to laterally support the bags 50 during their moving on the supporting plane 6.

In order to ease the sliding of the bags 50 along the advancing direction A on the supporting plane 6, the latter has a plurality of surface reliefs in order to reduce the sliding friction.

The vibrating means comprises one or more vibrating units 10, for example two, that connect the supporting plane 6 with underlying frame means 7 of the packaging machine 1. Each vibrating unit 10 is connected to the supporting plane 6 in order to impart an oscillating motion to the latter, which is shown in figure by a vector V, composed by a first component Vy that is substantially perpendicular to the supporting plane 6 and a second component Vx that is substantially parallel to the supporting plane 6.

In the shown embodiment, each vibrating unit 10 is provided with an elastic element 11, for example an elastic sheet or leaf spring, a first end 11 a thereof is connected to the supporting plane 6 by means of first connection means 13, and a second end 11b thereof is bound to the frame means 7 of the machine 1, for example by means of two side plates 14. The elastic element 11 is fastened to the frame means 7 with a tilt angle α between 5° and 15°, particularly equal to 10°, referring to the supporting plane 6, so that the oscillating motion (vector V) imparted to the supporting plane 6 is tilted by the above-mentioned tilt angle α with respect to a direction perpendicular to the supporting plane 6 itself, namely so that the oscillating motion is composed by the two components Vx and Vy that are perpendicular to each other.

Each vibrating unit 10 is also provided with electromagnet means 12 acting on said elastic element 11 in order to bring it in oscillation at least with a predefined oscillation frequency. More precisely, the electromagnet means 12 acts on, and brings in oscillation, the second end 11b of the elastic element 11, which therefore flexurally vibrates together with the supporting plane 6 as well.

The oscillation frequency is preferably between 35 Hz and 70 Hz.

The electromagnet means 12 is driven, for example, with a square wave current being generated by a digital electronic board, whose amplitude is adjustable and at most is 5A. The useful duty cycle of the square wave is between 30% and 70%.

In one variation not shown in the figures, each vibrating unit 10, in addition to the respective elastic element 11 connecting the supporting plane 6 with the frame means 7, comprises a rotating eccentric motor or the same that is fastened to the supporting plane 6 in order to bring in oscillation the latter with a predefined oscillation frequency, particularly between 35 Hz and 70 Hz.

The operation of the packaging machine 1 of the invention envisages that the bags 50, once formed and filled with a predefined quantity of product 100 in the forming and filling station 2, are placed on the underlying sliding plane 8 of the moving means 4 and therefore transferred by the moving means, particularly by the pushing elements 21 and the abutting elements 22 on the compacting unit 5. More precisely, the moving means moves the individual bags 50 from a first initial portion of the sliding plane 8 to the supporting plane 6 of the compacting unit 5 that is brought in vibration by the vibrating units 10. The latter impart an oscillating motion (vector V) to the supporting plane 6, the oscillating motion (vector V) being composed by a first component Vy that is substantially perpendicular to the supporting plane 6 and a second component Vx that is substantially parallel to the supporting plane 6.

It should be noted that the second component Vx causes the movement or translation of the bags 50 on the supporting plane 6 along the advancing direction A, therefore cooperating with the pushing elements 21 and the abutting elements 22 in moving the bags 5 from the forming and filling station 2 to the closing station 3. The first component Vy instead compacts and settles the product 100 inside the respective bags 5 during the movement of the latter along the supporting plane 6.

As pointed out by several trials being run by the applicant using several typologies of small size products or granular or powdered products, the vibration transmitted by the vibrating means 10 to the whole supporting plane 6 and, by contact with the same, to the bags 50, allows settling and compacting the product in an even and spread way without damaging the product integrity (for example fragile dry elements such as cookies, pasta, etc.) and/or the bag itself.

The oscillation frequency, preferably being between 35 Hz and 70 Hz, can be selected and chosen based on shape and size of the bag 50 and/or the type of product 100 to be compacted and however ensures optimally compacting the products in the bags.

Similarly, the square shape and the useful duty cycle between 30% and 70% of the current wave supplying the electromagnet means 12 help increasing the compacting efficiency of the products.

The length of the supporting plane 6 of the compacting unit 5 is such to guarantee a complete and optimal compacting and settling.

Therefore, the compacted bags 50 are transferred by the moving means 21, 22, 23, 24 to a second portion of the sliding plane 8 and along the latter until the closing station 3 where the open top portion of the bags is folded and closed, for example by sealing.

Thanks to the packaging machine 1 of the invention, and particularly to the compacting unit 5, therefore it is obtained a compact and optimal packaging of the product 100 inside the bags 50, which allows substantially reducing the voids inside the bag 50, avoiding in that way they can bump into each other and then break or damage during transportation or handling, mainly in case of small size and fragile products. At the same time, compacting the product allows correctly and smoothly closing the bag 50, without any void or cavity therein.

Moreover, since compacting and settling of the product are done during the transfer of the bags 50 from the forming and filling station 2 to the closing station 3, it is not necessary increase the duration of the packaging cycle.

## Claims

1. A packaging machine to package bags (50) of products, particularly food products having small size, or granular or powdered products, comprising:
- a forming and filling station (2) to form said bags (50) and dose a predefined quantity of product (100) inside each of them;
- a closing station (3) to close said bags (50) filled with said product (100);
- conveyor means (4) to receive said bags (50) which are open and contain said predefined quantity of product (100) from said forming and filling station (2) and to move said bags (50) towards said closing station (3) along an advancing direction (A);
- a compacting unit (5) that is arranged to compact said product (100) in said bags (50) and provided with a supporting plane (6) to support said bags (50) coming from said forming and filling station (2) and with vibrating means (10) that is connected to said supporting plane (6) and suitable to generate vibrations in the latter and in said bags (50) arranged on said supporting plane (6), said vibrations carrying out a compacting and/or settlement of said product (100) in the respective bags (50);
**characterized in that** said vibrating means comprises at least one vibrating unit (10) comprising at least one elastic element (11) which connects said supporting plane (6) to frame means (7) of said packaging machine (1) and electromagnet means (12) acting on said elastic element (11) in order to make the latter oscillate with a predefined oscillation frequency, said elastic element (11) being fastened to said frame means (7) with an inclination angle (α) between 5° and 15°, particularly equal to 10°, with respect to said supporting plane (6).

2. The machine according to claim 1, wherein said vibrating unit (10) is connected to said supporting plane (6) so as to impart to the latter an oscillating motion (V) comprising a first component (Vy) that is substantially perpendicular to said supporting plane (6) and a second component (Vx) that is substantially parallel to said supporting plane (6), wherein said first component (Vy) performs said compacting and/or settlement of said product (100) in said bags (50) during a movement of the latter along said supporting plane (6) and said second component (Vx) at least cooperates in said movement of said bags (50) on said supporting plane (6) along said advancing direction (A).

3. The machine according to claim 1 or 2, wherein said vibrating means (10) makes said supporting plane (6) vibrate with an oscillation frequency between 35 and 70 Hz.

4. The machine according to any preceding claim, wherein said vibrating means comprises a pair of vibrating units (10) that connect said supporting plane (6) to said frame means (7).

5. The machine according to any preceding claim, wherein said compacting unit (5) is interposed between said forming and filling unit (2) and said conveyor means (4).

6. The machine according to any preceding claim, wherein said conveyor means (4) comprises a sliding plane (8) that is coplanar with said supporting plane (6), two side walls (9) that are opposite to each other and parallel to said advancing direction (A) and moving means (21, 22, 23, 24) to engage and move said bags (50) along said advancing direction (A).

7. The machine according to claim 6, wherein said moving means (21, 22, 23, 24) comprises a plurality of pushing elements (21) and abutting elements (22) that are movable and arranged to engage and move said bags (50) along said advancing direction (A).

8. The machine according to claim 7, wherein said pushing elements (21) and said abutting elements (22) are fastened to at least one closed loop flexible element (23, 24) that is r actuated in order to move the pushing elements (21) and the abutting elements (22) engaged with said bags (50) along said advancing direction (A).

9. The machine according to claim 7 or 8, wherein said compacting unit (6) is associated to said conveyor means (4), said pushing elements (21) and said abutting elements (22) being arranged to move said bags (50) along said advancing direction (A) on said supporting plane (6).
